(19) Europäisches Patentamt
European Patent Office
Office européen des brevets

(11) Publication number: **0 290 055 A1**

(12) **EUROPEAN PATENT APPLICATION**

(21) Application number: 88107510.5

(22) Date of filing: 08.10.84

(51) Int. Cl.[4]: C08F 210/16 , C08F 2/00 , C08F 4/64

(43) Date of publication of application: 09.11.88 Bulletin 88/45

(60) Publication number of the earlier application in accordance with Art.76 EPC: 0 177 622

(84) Designated Contracting States: DE FR GB IT NL

(71) Applicant: **SUMITOMO CHEMICAL COMPANY, LIMITED**
**15 Kitahama 5-chome Higashi-ku**
**Osaka-shi Osaka 541(JP)**

(72) Inventor: **Takao, Hiroyoshi**
**604, Futsuresukaihaitsu, 7-16**
**Kurosunadai-3-chome**
**Chiba-shi(JP)**
Inventor: **Yamamoto, Keisaku**
**3-14, Aobadai-5-chome**
**Ichihara-shi(JP)**
Inventor: **Harada, Hiroyuki**
**1353-4, Shiizu**
**Ichihara-shi(JP)**

(74) Representative: **Henkel, Feiler, Hänzel & Partner**
**Möhlstrasse 37**
**D-8000 München 80(DE)**

(54) **Process for producing ethylene copolymer.**

(57) In a process for producing an ethylene copolymer by copolymerizing ethylene with an α-olefin or copolymerizing ethylene with an α-olefin and a non-conjugated diene in the presence of a Ziegler-Natta catalyst comprising an organoaluminum compound and a compound of a transistion metal belonging to Group IV or V of the periodic table or comprising these and a catalyst-activating agent, in a polymerization medium which is substantially incapable of dissolving the resulting ethylene copolymer, and thereby producing a rubberlike ethylene copolymer in particulate form, the improvement which comprises adding to the polymerization reaction system, as adhesion-preventing agent, an alkali metal salt of a sulfocarboxylic acid dialkyl ester.

EP 0 290 055 A1

## PROCESS FOR PRODUCING ETHYLENE COPOLYMER

### BACKGROUND OF THE INVENTION

### FIELD OF THE INVENTION

This invention relates to a process for producing a copolymer of ethylene and α-olefin or a copolymer of ethylene, an α-olefin and a non-conjugated diene.

### DESCRIPTION OF THE PRIOR ART

There is well known a process for producing a copolymer of ethylene and α-olefin or ethylene, an α-olefin and a non-conjugated diene (hereinafter referred to as "ethylene copolymer") by using a so-called Ziegler-Natta catalyst comprising a combination of a compound of a transition metal belonging to Group IV or V of the periodic table and an organoaluminium compound. As the production process, there are known a solution polymerization method comprising conducting polymerization in a solvent capable of dissolving the resulting copolymer, or a slurry polymerization method comprising conducting polymerization in a polymerization medium substantially incapable of dissolving the resulting copolymer, and dispersing a particulate polymer into the polymerization medium. Among these production processes, the slurry polymerization method is widely used because it is advantageous as compared with the solution polymerization method in that the viscosity of solution is low, that stirring and transfer are easy, and that separation of the polymer from the polymerization medium is easy.

However, according to the slurry polymerization method, the resulting polymer particles adhere to agitating blades, reactor walls, pipes for transfer or the like, and mutual adhesion of the polymer particles also occurs because in particular, ethylene copolymers have adhesiveness. In the case of the ethylene copolymers, this adhesion becomes a particularly serious problem.

In order to prevent such mutual adhesion of the polymer particles, adhesion of the polymer particles to reactor walls or agitating blades, and the like, there has been proposed a method in which polymerization reaction is conducted at a relatively low temperature of -80°C to 30°C (Japanese Patent Publication No. 10,491/61). However, in spite of the procedure at such a low temperature, there has not yet effectively been prevented mutual adhesion of the polymer particles, their adhesion to reactor walls or agitating blades, and the like.

Furthermore, DE-A-1 236 200 discloses the use of adhesion preventing agents in the production of resins, and the adhesion preventing agents include an alkali salt, ammonium salt, or mono-, di- or triethanol amine salt of alkylsulfonic acid, alkylarylsulfonic acid, alkylsulfaten or fatty acid, as well as sodium salt of alkyl-arylsulfonic acid as a cationic active example such as a long-chain amine salt. These compounds and "an alkali metal salt of sulfocarboxylic acid dialkyl ester" as specified in the present invention later are, for example as a sodium salt, different from each other in chemical structure as shown below:

Present invention:

An alkali metal salt of sulfocarboxylic acid dialkyl ester

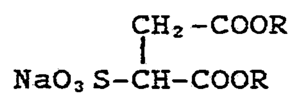

DE-A-1 236 200:
An alkali metal salt of alkyl-arylsulfonate

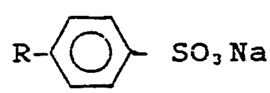

### SUMMARY OF THE INVENTION

In producing an ethylene copolymer by such a slurry polymerization method, the present inventors have investigated a process for producing an ethylene copolymer efficiently by lowering the above-mentioned defects and preventing mutual adhesion of the polymer particles, their adhesion to reactor walls or agitating blades, and the like, and have consequently found that the purpose described above can be achieved by the presence of a special adhesion-preventing agent in a polymerization reaction system, whereby this invention has been accomplished.

The object of this invention is to provide a process for producing an ethylene copolymer effectively.

According to this invention, there is provided a process for producing an ethylene copolymer by copolymerizing ethylene with an α-olefin or copolymerizing ethylene with an α-olefin and a non-conjugated diene in the presence of a Ziegler-Natta catalyst comprising an organoaluminum compound and a compound of a transition metal belonging to Group IV or V of the periodic table or comprising these and a catalyst-activating agent, in a polymerization medium which is substantially incapable of dissolving the resulting ethylene copolymer, and thereby producing a rubberlike ethylene copolymer in particulate form, which is characterized by adding to the polymerization reaction system, as adhesion-preventing agent, an alkali metal salt of a sulfocarboxylic acid dialkyl ester.

## DETAILED DESCRIPTION OF THE INVENTION

As the α-olefin used in this invention, there are exemplified propylene, 1-butene, 4-methyl-1-pentene and 1-hexene.

As the non-conjugated diene, there are exemplified 1,4-hexadiene, dicyclopentadiene, methyldicyclopentadiene, vinylnorbornene, 5-ethylidene-2-norbornene and isopropenylnorbornene.

As the polymerization medium which is substantially incapable of dissolving the ethylene copolymer, there are exemplified propylene, propane, 1-butene, butane, methylene chloride, ethylene chloride and ethyl chloride.

These are used alone or as a mixture thereof. The above-mentioned polymerization medium becomes a raction component in this invention in some cases, and in this case, it is used in an amount larger than the amount consumed for the reaction and the surplus medium acts as solvent.

The composition of the ethylene copolymer can be changed over a wide range, but when the ethylene content becomes high, a partly crystalline polymer is produced, and hence for obtaining a rubberlike copolymer, it is preferable to set the starting monomer ratio so that the ethylene content of the ethylene copolymer is 20 to 90% by weight, preferably 30 to 86% by weight.

As the catalyst for polymerization, there is used a so-called Ziegler-Natta catalyst which gives a heretofore well-known rubberlike ethylene copolymer. This catalyst comprises an organoaluminum compound and a compound of a transition metal belonging to Group IV or V of the periodic table, and the combination of these can easily be selected by those skilled in the art. Further, it is also possible to co-use a catalyst-activating agent such as an ester of halogenated carboxylic acid, a halogenated ketone and a catalyst-modifying agent such as a ketone, an ester and an alcohol.

Here, the organoaluminum compound is a compound represented by the general formula $R'_nAlX_{3-n}$ (wherein $R'$ is a hydrocarbon group having 1 to 20 carbon atoms, X is a halogen atom or an alkoxyl group, and n is a number satisfying $1 \leq n \leq 3$), for example, a compound represented by the formula $R'_3Al$, $R'_2AlX$, $R'AlX_2$ and $R'_{1.5}AlX_{1.5}$,

and these compounds are used alone or as a mixture thereof. Concrete examples of these compounds include triethylaluminum, triisopropylaluminum, triisobutylaluminum, trihexylaluminum, diethylaluminum chloride, diethylaluminum bromide, diisobutylaluminum chloride, diisobutylaluminum bromide, ethylaluminum sesquichloride, isobutylaluminum sesquichloride, ethylaluminum dichloride and isobutylaluminum chloride.

As the compound of a transition metal belonging to Group IV or V of the periodic table, vanadium compounds and titanium compounds are preferred. As the vanadium compounds, there are exemplified compounds represented by the general formula $VX_4$, $VOX_3$ or $VO(OR')_nX_{3-n}$ wherein $R'$, X and n have the same meanings as defined above. Concrete examples of these compounds include vanadium tetrachloride, vanadium tetrabromide, vanadium oxytrichloride, vanadic acid triethoxide, vanadic acid diethoxychloride, vanadic acid ethoxydichloride, vanadic acid tributoxide, vanadic acid dibutoxychloride, vanadic acid butoxydichloride and vanadium triacetylacetonato. As the titanium compounds, there are exemplified titanium tetrachloride, titanium trichloride and titanium trichloride supported on a magnesium compound or silica. These can be used alone or as a mixture thereof.

Further, as the catalyst-activating agent, there are used esters of halogenated carboxylic acids, halogenated ketones, halogenated hydrocarbons, Concrete examples of these compounds include methyl trichloroacetate, butyl perchlorocrotonate, butyl 2,3,4,4-tetrachloro-3-butenate, ester of trichloroacetic acid and ethyl cellosolve, hexachloroacetone and perchlorobutadiene.

As to the polymerization condition, it is preferable to conduct the polymerization at a temperature lower than that of conventional polymerization conditions of olefins (e.g., at 40° to 120°C, at atmospheric pressure to 9800 kPa).

When the polymerization reaction is conducted at a high temperature, adhesion of the resulting copolymer particles occurs. The polymerization at an extremely low temperature causes a decrease

of the polymerization reaction rate, requires a high energy for removing heat of polymerization to maintain the system at a low temperature, and hence is not preferable. Therefore, the polymerization reaction is conducted preferably between -40°C and 60°C, more preferably between -30°C and 40°C.

The pressure is atmospheric pressure to 9800 kPa and the polymerization reaction is conducted in the presence or absence of a chain transfer agent.

As the alkali metal salt of a sulfocarboxylic acid dialkyl ester which is one of the adhesion-preventing agents used in this invention, alkali metal salts of dialkyl sulfosuccinates are preferred, and more concretely, alkali metal salts of dioctyl sulfosuccinate or dihexyl sulfosuccinate are exemplified. As the alkali metal salts, sodium salts or potassium salts are preferred.

The above-mentioned adhesion-preventing agent used in this invention brings about a sufficient effect even when added in a very small amount of usually 5 to 100 ppm, more preferably 10 to 50 ppm based on the polymerization medium introduced into a reactor.

The polymerization reaction can be conducted by a batchwise or continuous operation. As to addition of the adhesion-preventing agent, in the case of the batchwise operation, said agent is added in one portion to a reaction vessel before the beginning of the polymerization, and in the case of the continuous operation, it is preferable to supply said agent to a reaction vessel continuously together with the polymerization medium. The adhesion-preventing agents described above can be used alone or as a mixture thereof.

Thus, according to the process of this invention, the polymerization reaction is not inhibited substantially, and mutual adhesion of polymer particles or adhesion of polymer particles to vessel walls, agitating blades or the like is reduced or prevented, so that an ethylene copolymer can be efficiently produced.

This invention is explained below in more detail by way of Examples, but the invention is not limited thereto.

EXAMPLE 1

In a 1.5-liter autoclave made of stainless steel were placed 400 g of propylene, 50 g of ethylene and 18 mg (40 ppm) of sodium dioctyl sulfosuccinate, and cooled to 0°C, after which 1.0 mmol of ethylaluminum sesquichloride and 0.1 mmol of vanadium oxytrichloride were continuously added. The temperature inside the autoclave was controlled at 0°C. The ratio between unreacted ethylene and propylene in the reactor was controlled so that the ratio of them is kept at constant by feeding 27 g of ethylene continuously to the reactor.

The ethylene-propylene copolymer produced by the copolymerization reaction had suspended as particles in the polymerization medium (propylene). After completion of the reaction, the polymerization was stopped by adding a small amount of methanol in the reactor, and the particulate copolymer was separated from the polymerization medium by filtration. The copolymer thus obtained was good rubberlike particles having a particle size of about 2 mm. There was observed no adhesion of copolymer particles to the inside of polymerization vessel or agitating blades.

Thus, 43 g of the copolymer was obtained. The ethylene content of the copolymer was 68% by weight as determined by infrared absorption spectrum.

COMPARATIVE EXAMPLE 1

The same procedures as in Example 1 were repeated, except that no sodium dioctyl sulfosuccinate was added. In this copolymerization, stirring by a stirrer became impossible 10 minutes after the copolymerization was started. After the polymerization was stopped by addition of a small amount of methanol, the same procedure as in Example 1 was conducted, but the copolymer thus obtained was not particulate but in the form of a large mass adhering to agitating blades. The ethylene content of this rubberlike copolymer was 66% by weight, and its yield was 16 g.

EXAMPLE 2

Into the same reactor as used in Example 1 were introduced 400 g of propylene and 30 g of ethylene, after which 6.5 mg (15 ppm) of sodium dioctyl sulfosuccinate was added, and the resulting mixture was maintained at 5°C. Hydrogen was added as molecular weight regulator at a partial pressure of 490 kPa and the copolymerization was conducted by continuously supplying 1.0 mmol of ethylaluminum sesquichloride, 0.02 mmol of vanadic acid ethoxydichloride [$VO(OEt)Cl_2$] and further 0.04 mmol of methyl trichloroacetate as catalyst-activating agent. Thus, there was obtained 52 g of a good particulate copolymer having a particle size of about 2 mm. The ethylene content

of this rubberlike copolymer was 34% by weight. In this invention, there was observed no adhesion of copolymer particles to polymerization vessel or agitating blades.

EXAMPLE 3

Copolymerization was conducted in the same manner as in Example 1, except that an autoclave made of glass was used. Also in this copolymerization, there was observed neither mutual adhesion of polymer particles nor adhesion of polymer particles to vessel walls or agitating blades, and the resulting copolymer was good particles having a particle size of about 2 mm. Thus, 40 g of a copolymer having an ethylene content of 70% by weight was obtained.

EXAMPLE 4

Into the same reactor as used in Example 1 were charged 1.2 liters of ethylene dichloride and 40 mg (about 25 ppm) of sodium dioctyl sulfosuccinate. Thereinto were introduced 18 g of ethylene and 60 g of 1-butene, after which while maintaining the reactor at 40°C, hydrogen as a molecular weight regulator was added at a partial pressure of 39.2 kPa and the copolymerization was conducted by continuously adding 1 mmol of ethylaluminum sesquichloride, 0.1 mmol of vanadium oxytrichloride and 0.4 mmol of n-butylperchlorocrotonic acid. During the copolymerization, 43 g of ethylene and 8 g of 1-butene were continuously supplied. After-treatment of the resulting product was carried out in the same manner as in Example 1 to obtain 50.6 g of a good rubberlike particulate copolymer having a particle size of about 2 mm. The ethylene content of the copolymer was 85.2% by weight. In this copolymerization, there was observed no adhesion of copolymer particles to polymerization vessel or agitating blades.

EXAMPLE 5

Copolymerization was conducted in the same manner as in Example 4, except that 14 mg of $TiCl_4$ supported on $MgCl_2/SiO_2$ and 2 mmol of triethylaluminum were used as catalyst components, that 25 g of ethylene and 80 g of propylene were used as initially charged monomers, and that during the polymerization, 31 g of ethylene and 10 g of propylene were continuously supplied. After-treatment was carried out in the same manner as in Example 4 to obtain 40.3 g of a good rubberlike particulate copolymer having a particle size of about 2 mm. The ethylene content of the copolymer obtained was 78.3%. In this copolymerization, there was observed no adhesion of copolymer particles to polymerization vessel or agitating blades.

EXAMPLE 6

Copolymerization was conducted in the same manner as in Example 1, except that 2.4 g of 5-ethylidene-2-norbornene was continuously added in place of the ethylene continuously added during the copolymerization. The resulting ternary polymer was rubberlike good particles having a particle size of about 2 mm. Thus, 39 g of the ternary copolymer was obtained. The ethylene content of the ternary copolymer was 66% by weight as determined by infrared absorption spectrum, and its iodine value was 8.

## Claims

1. In a process for producing a rubberlike ethylene copolymer by copolymerizing ethylene with an α-olefin or copolymerizing ethylene with an α-olefin and a non-conjugated diene in the presence of a Ziegler-Natta catalyst comprising an organoaluminium compound and a compound of a transition metal belonging to Group IV or V of the periodic table or comprising these and a catalyst-activating agent, in a polymerization medium which is substantially incapable of dissolving the resulting ethylene copolymer, and thereby producing a rubberlike ethylene copolymer in particulate form, the improvement which comprises adding to polymerization system, as an adhesion-preventing agent, an alkali metal salt of sulfocarboxylic acid dialkyl ester.

2. A process according to Claim 1, wherein the alkali metal salt of a sulfocarboxylic acid dialkyl ester is an alkali metal salt of dialkyl sulfosuccinate.

3. A process according to Claim 2, wherein the alkali metal salt of dialkyl sulfosuccinate is an alkali metal salt of dioctyl sulfosuccinate or dihexyl sulfosuccinate.

4. A process according to Claim 1, wherein the alkali metal salt is a sodium salt or a potassium salt.

5. A process according to Claim 1, wherein the amount of the adhesion-preventing agent is 5 to 100 ppm in the polymerization.

6. A process according to Claim 1, wherein the polymerization medium is propylene, propane, 1-butene, butane, methylene chloride, ethylene chloride or ethyl chloride.

7. A process according to Claim 1, wherein the α-olefin is propylene or 1-butene, and the non-conjugated diene is 1,4-hexadiene, dicyclopentadiene or 5-ethylidene-2-norbornene.

8. A process according to Claim 1, wherein the polymerization temperature is -40°C to 60°C.

9. A process according to Claim 1, wherein the organoaluminum compound is triethylaluminum, diethylaluminum chloride, diisobutylaluminum chloride, ethylaluminum sesquichloride or ethylaluminum dichloride.

10. A process according to Claim 1, wherein the transition metal compound is vanadium tetrachloride, vanadium oxytrichloride, vanadic acid triethoxide, vanadic acid diethoxychloride, vanadic acid ethoxydichloride, vanadic acid tributoxide, vanadic acid dibutoxychloride, vanadic acid butoxydichloride or vanadium triacetylacetonato.

11. A process according to Claim 1, wherein a catalyst-activating agent is present in the polymerization system.

12. A process according to Claim 1, wherein the catalyst-activating agent is methyl trichloroacetate, butyl perchlorocrotonate, butyl 2,3,4,4-tetrachloro-3-butenate or trichloroacetic acid-ethyl cellosolve ester.

13. A process according to Claim 1, wherein the ethylene content of the ethylene copolymer is 20 to 90% by weight.

European Patent Office

# EUROPEAN SEARCH REPORT

Application Number

EP 88 10 7510

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 535 597 (SHOWA DENKO) * Claims 1,8,10; page 4, paragraph 5 - page 6, paragraph 1; page 10, paragraph 2; page 25, table III; page 27, table IV * | 1-13 | C 08 F 210/16<br>C 08 F 2/00<br>C 08 F 4/64 |

TECHNICAL FIELDS SEARCHED (Int. Cl.4)

C 08 F

The present search report has been drawn up for all claims

| Place of search | Date of completion of the search | Examiner |
|---|---|---|
| THE HAGUE | 24-08-1988 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)